# EUROPEAN PATENT SPECIFICATION

(11) **EP 2 151 731 B1**
(45) Date of publication and mention of the grant of the patent: **23.11.2011**
(21) Application number: 08425538.9
(22) Date of filing: 05.08.2008
(51) Int. Cl.: G05D 7/01

(54) **Flow regulator with constant output pressure for the controlled supply of medical gas**
Fluss regulator mit Konstanthalten des Auslassdruckes für medizinisches Gas
Régulateur de débit à pression de sortie constante pour alimentation en gas médicaux

(43) Date of publication of application: 10.02.2010
(73) Proprietor: Flow Meter S.p.a., 24040 Levate (Bergamo) (IT)
(72) Inventor: Paratico, Roberto, 24040 Levate (BG) (IT)
(74) Representative: Botti, Mario

(56) References cited:
- EP-A- 1 054 312
- US-A- 3 995 656
- US-A- 4 276 902
- US-A- 4 655 246
- US-A- 5 875 815

## Description

### Field of application

The present invention refers to a flow rate regulator with variable supply and constant outlet pressure, in particular of the type used for supplying medical gas.

### Prior art

Regulation of the flow rate of a gas or generic fluid circulating in circuits of pipes is required in various applications concerning various technical fields.

In particular, used in the field of medicine are flow rate regulators for dosing the supply of gas under pressure intended for therapeutic applications, such as for example oxygenotherapy. Such regulators, also referred to as flowmeters due to the fact that they allow an instant reading of the flow rate of the administered fluid, can be applied at the outlet of a distribution system or, interposing a suitable high pressure reducer, to a container under pressure holding medical gas.

For obvious reasons, a paramount requirement for the devices of the described type regards the accuracy in terns of flow rate of the supplied fluid.

On the other hand, no matter how much the different flowmeters present in the market adopt different flow rate regulation and measurement methods, all the various products are adjusted referring to a determined supply pressure. Should the pressure vary, the device is no longer capable of providing the suitably accurate supply flows expected by the user.

No matter how much the regulation devices are normally associated to medical gas distribution systems with rigidly defined outlet pressures, the latter can however have even significant variations, for example due to the number of users simultaneously connected to the system. Furthermore, the regulations in different countries can provide for even considerably different pressure values.

Therefore, in order to avoid inaccuracies or fluctuations in the supplied flow rate, some flowmeters integrate in their structure a pressure reducer intended to regulate and stabilise the pressure upstream of the actual flow rate regulation mechanism, guaranteeing an accurate control of the flows by the latter.

Devices of the latter type are herein referred to as constant outlet flow rate regulators.

In their most common embodiment, such pressure reducers comprise a piston facing a pressure control chamber, cooperating with a contrast spring and a throttle valve.

However, though advantageous from various points of view, and though substantially meeting the object it was intended for, the device thus formed has known drawbacks yet to be overcome.

The main drawback of the flow rate regulator lies in its large overall size, such size depending on the necessity to accommodate both the flow rate selection mechanism and the pressure reducer in the body of the device. Above all, the latter requires a suitable dimensioning of the body of the device, in particular referring to its longitudinal expansion, in order to be able to insert the piston and the contrast spring associated thereof.

The large size implies frequent logistic problems in hospitals; for example, there might not be the space required to install the device to a socket adjacent to a headboard beam.

Also the weight increase due to the integration of the reducer piston is undesired in that in that it increases the load weighing on the supplying socket to which the flowmeter is associated, with possible damage of the latter and the consequent fluid leakage.

Another drawback of the constant outlet pressure devices lies in their inherent construction complexity. As a matter of fact, such devices comprise a large number of components, often difficult to obtain through moulding, with inevitable consequences on the production costs.

Document US 4,655,246 discloses a regulated gas flow control valve meant to be attached to a high pressure gas cylinder. A piston-actuated regulator drops the high pressure to a low pressure, while a flow control knob allow selection of a desired delivery flow rate.

Document US 3,995,656 also discloses a regulator for the control of high pressure gases. The regulator comprises a first piston type regulator stage and a one piece resilient control washer which serves as a second regulating stage.

Document US 5,875,815 discloses a combination pressure regulator/drain check valve comprising an internal reciprocating plunger.

Therefore, the technical problem on which the present invention is based is that of providing a flow rate regulator having structural and functional characteristics such to overcome the aforementioned drawbacks with respect to the prior art, and in particular having a compact shape and low production costs.

### Summary of the invention

The abovementioned technical drawback is overcome by a flow regulator according to claim 1.

Further characteristics and advantages of the flow regulator according to the invention shall be clear from the description, provided hereinafter, of some embodiments provided for indicative and nonlimiting purposes with reference to the attached drawings.

### Brief description of the drawings

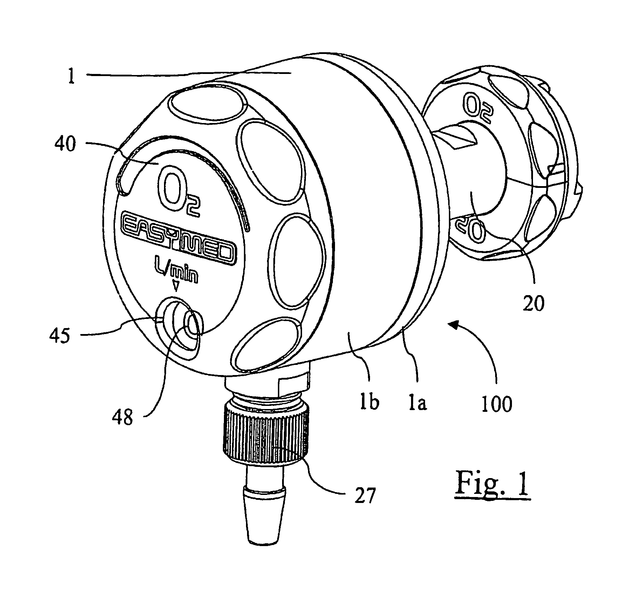

Figure 1 represents a perspective view of a flow regulator according to the present fining;
figure 2 represents a sectional view, made according to a median axis, of the flow regulator in figure 1;
figure 3 represents a perspective view, with parts detached, of the flow regulator in figure 1;
figure 4 represents a perspective view of an enlarged detail of the flow regulator in figure 3.

### Detailed description

Referring to the attached figures, 100 generally indicates a flow rate regulator, mainly provided for controlled supply of medical gas.

The flow rate regulator 100 comprises a main body 1, serving as a support and container, having a fluid inlet 21 and outlet 26 openings, both in communication with an internal chamber 23 inside the main body 1 itself.

The main body 100 is shaped to form a solid revolution around a longitudinal axis x; arranged along this longitudinal axis being the inlet opening 21 defined beforehand. Furthermore, indicated is a transverse axis y normal with respect to the longitudinal axis x which determines the orientation of the outlet opening 26 with respect to the main body 1. The main body 1 can be made of metal material, for example anodised aluminium or chrome-plated brass, or it can be obtained through injection moulding of polymer material such as polycarbonate.

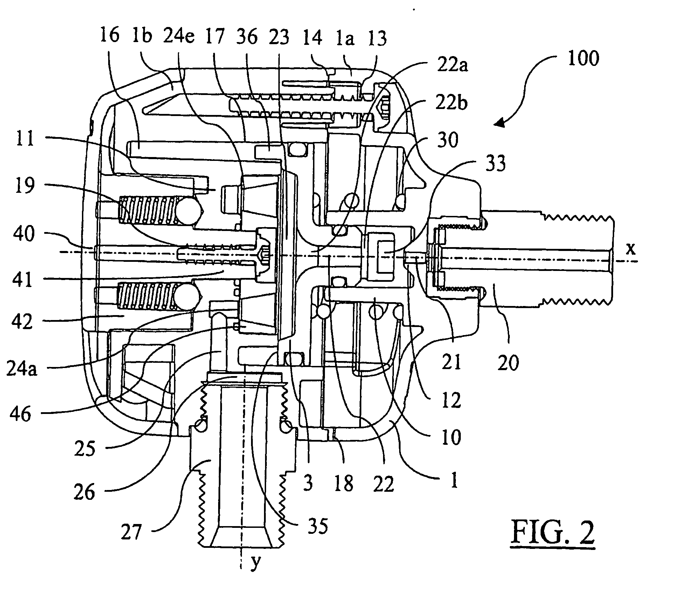

Actually, as visible in figure 2, the main body 1 is made up of a first half-shell 1a and a second half-shell 1b, substantially cup-shaped, coupled to each other by means of counter-shaped edges 14 and integrally joined by means of closure screws 13. The two half-shells 1a, 1b, as observable in the figures and from the following description, are particularly adapted to perform the moulding.

The closure screws 13, three in the illustrated example, pass through holes arranged in a peripheral manner on the first half-shell 1a and they are screw-engaged into special threaded seats arranged along a peripheral circumference of the second half-shell 1b.

In order to control the fluid transiting through the flow rate regulator 100, the flow rate regulator comprises flow regulating means operating downstream of the internal chamber 23 and pressure reduction means.

The latter comprise a piston 3 facing the internal chamber 23 and elastic means associated thereto for countering the fluid pressure in such chamber.

The piston 3, advantageously arranged according to the longitudinal axis x, comprises a stem 31 and a plate 32 integral therewith.

The plate 32 sealingly slides inside an internal cylindrical wall 17 which defiles the cup-shape of the first half-shell 1a. The plate 32 contributes to define the internal chamber 23; in particular it defines an end of such a chamber, clearly moveable with the position of the piston 3.

The face of the plate 32 facing the internal chamber 23 has a central concavity 34, bordered by a peripheral relief 35. The relief settles against an abutment surface 15 of the second half-shell 1b of the main body 1, limiting the movement of the piston 3. In particular, the abutment surface 15 is the end surface of a central portion 11 of the second half-shell 1b, said central portion 11 developing projecting with respect to the bottom of the half-shell. The bottom of both half-shells should be identified with reference to the abovementioned cup-shape.

It should be observed that, when the peripheral relief 35 of the plate 32 ends up in abutment against the abutment surface 15, the volume of the internal chamber 23 is reduced to the volume of the central concavity 34. Such configuration is represented in figure 2 attached.

The face of the plate 32 further comprises a plurality of pins 36 arranged projecting on the relief 35, intended to slide inside an interspace 16 defined between the central portion 11 and the internal cylindrical wall 17 of the second half-shell 1b. Such pins 36, three in the embodiments illustrated for exemplification purposes, contribute to guide the movement of the piston 3 inside the main body 1.

The stem 31 of the piston 3 sealingly slides inside a guide bush 10 provided for in the first half-shell 1a of the main body 1. The bush guide 10 develops projecting with respect to the bottom of the first half-shelf 1a, in the direction of the second half-shell 1b. The axis of the bush 10 coincides with the longitudinal axis x; therefore, opening at its bottom is the inlet opening 21 identified previously. Therefore, the internal volume of the bush 10 is in communication with the opening supplying the device 100.

The stem 31 has an internal channel 22, connecting the internal volume of the bush guide 10 with the internal chamber 23, that is with the central concavity 34 of the plate 32.

The stem 31 and the internal channel 22 are shaped in such a manner to throttle the flow of the fluid between the inlet opening 21 and internal chamber 23 at a stopper configuration of the stem 31 inside the bush guide 10. The stopper configuration is determined by an excessive pressure of the fluid in the internal chamber 23; as a matter of fact, thus pressure is such to overcome the opposition of the elastic means associated to the piston 3 and push it towards the bottom of the first half-shell 1a. Throttling the flow in these conditions, leads to restoring the balance of the functional internal pressure, as described in the introduction, upon the stabilisation of the supplied flow-rate.

In order to throttle the flow, the stem 31 of the piston 3 comprises, at its free end, a plug 33 cooperating with a seat 12 arranged at the bottom of the bush guide 10, at the inlet opening 21. The motion of the stem 31 approaching the bottom of the first half-shell 1a thus determines the desired interference with the flow of the fluid entering the internal volume of the bush guide 10.

In particular, as visible in figure 2, the seat 12 has a frusto-conical shape projecting with respect to the bottom of the half-shell; the inlet opening 21 opens at the centre of the frusto-conical projection.

The channel 22 inside the stem 31 comprises a main portion 22a ad a secondary portion 22b communicating with the main portion. The main portion 22a develops in a linear manner along the stem 31 following the longitudinal axis x and it opens, through a funnel-shaped fitting, on the central concavity 34 of the plate 32. On the other hand, the secondary portion 22b develops in a transverse manner entirely passing through (from end to end) an end portion of the stem 31 along its diameter, thus opening at two points on the cylindrical lateral surface of the stem 31 itself. In order to allow the fluid communication between the internal channel 22 and the inlet opening 21, the end portion of the stem 31 has a smaller section with respect to the internal section of the bush guide 10.

It should be observed that gaskets 37, integral with the stem 31 and the plate 32 of the piston 3, are provided to guarantee the sealed sliding of the elements inside the bush guide 10 and the internal cylindrical wall 17.

The previously defined elastic means comprise a helical spring 30, advantageously coaxially arranged outside the bush guide 10. The helical spring 30 is thus accommodated inside a compartment defined by the inner surfaces of the first half-shell 1a and by the plate 32 of the piston 3. The compartment is arranged in communication with the atmospheric pressure by means of a circulation hole 18 of the first half-shell 1a.

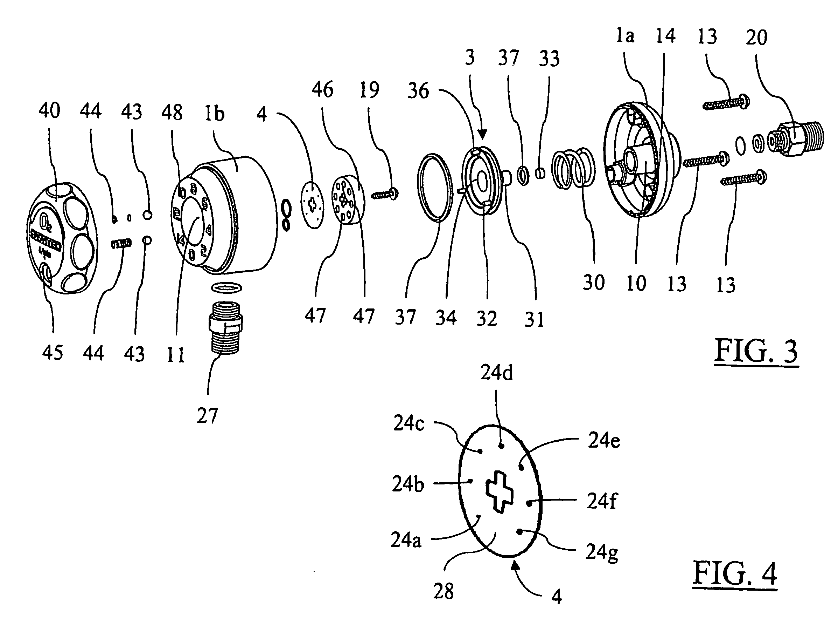

According to the points outlined above, it is clear how the piston 3 is mounted sliding between the two half shells 1a, 1b forming the main body, its movement being limited in one direction by the contact with a surface of the fist half-shell (peripheral relief 35 in abutment against the contact surface 15), in the other direction by the contact with a surface of the second half-shell (plug 33 accommodated on the seat 12). The means for regulating the flow rate of the device 100 comprise a selection member having a plurality of calibrated orifices, defined in figures 2 and 4 attached with reference number 24 followed by a letter (a-g, in alphabetical progression)

The selection member is in this case made up of a disk 4 rotating around its own axis, coinciding with the longitudinal axis x of the device 100.

The calibrated orifices 24a-g, seven in the represented embodiment, are arranged along a circumference of such rotating disk 4 in such a manner to be selectively interposable between the internal chamber 23 and the outlet opening 26. In other words, a rotation of the rotating disk 4 allows defining which of the seven orifices is to be interposed between the chamber 23 and the opening 26. For example, interposed in the configuration of figure 2, is the orifice marked as 24a.

The size of the calibrated orifices 24a-g are calibrated with respect to the controlled pressure of the internal chamber 23 in such a manner to guarantee the known flow rate flow through the outlet opening.

Preferably, the orifices 24a-g are arranged equally spaced along the circumference of the rotating disk 4, according to a predetermined sequence of the defined supply flow rates. Advantageously provided between an orifice with a greater flow rate and the one with a lower flow rate is a full portion 28 of the rotating disk 4, without the through hole, which can be interposed between the internal chamber 23 and the outlet opening 26 for interrupting the flow of the fluid.

In the represented embodiment, the seven calibrated orifices 24a-g define flow rates at predefined paces.

As observable in figure 3, the rotating disk 4, preferably being a metal foil element, is supported by a rotating drum 46 integral thereto, having through holes 47 aligned with the calibrated orifices 24a-g. The rotating drum 46 has a diameter equivalent to the rotating disk 4 but it has a greater thickness; it is coaxially associated to the disk and serves as a support.

The drum is accommodated inside a cylindrical cavity of the central portion 11 of the second half-shell 1b, in such a manner that the passing holes 47 directly face the internal chamber 23, and they connect it in communication with the respective calibrated orifices 24a-g. The rotating disk 4 is interposed between the central portion 11 and the rotating disk 46.

A face of the rotating drum 46, substantially coplanar with the contact surface 15 of the central portion 11, thus delimits an end of the internal chamber 23 opposite to the one defined by the plate 32 of the piston 3.

In order to allow an operator to operate on the rotating drum/disk block 46; 4, such block is associated in a solid manner to a regulation knob 40 by means of a central shaft 41 of the latter, to which it is associated by means of a fixing screw 19. The central shaft 41 passes through the intermediate portion 11 of the main body 1, which is thus partially interposed between the rotating disk 4 and the regulation knob 40.

Provided inside the intermediate portion 11 is an elbow fitting 25 connecting one of the calibrated orifices 24a-g, in this case the one arranged at the position of orifice 24a of figure 2, upon the outlet opening 26.

The elbow fitting 25 is required to connect the orifice, extending according to an axis parallel to the longitudinal axis x, to the transverse axis y of the outlet opening 26. It should be observed that the elbow fitting 25 is the only detail of the half-shells 1a, 1b requiring the use of a core in cases where these elements are made by means injection moulding.

The regulation knob 40 is preset to snap-lock in a plurality of operating configurations: at each of such operating configurations a different calibrated orifice 24a-g, or alternatively the abovementioned full portion 28 of the rotating disk 4, is interposed between the internal chamber 23 and the elbow fitting 25.

The regulation knob 40 is counter-shaped in such a manner to associate in a rotating manner to the eternal of the second half-shell 1b, at the bottom of the latter. In this case, the knob holds a central cylindrical part 42, departing from which is the central shaft 41, which is inserted inside a cylindrical recess of the second half-shell 1b; such cylindrical recess is provided for in the intermediate portion 11 of the half-shell.

Provided for between the central cylindrical part 42 and the bottom of the cylindrical recess where it is accommodated, is at least one bead 43 (two in the represented embodiment), cooperating with a locking spring 44 and with indentations provided for at the bottom of the recess to lock the regulation knob 40 in the various operating configurations.

Furthermore, the regulation knob 40 has a window 45, provided for allowing the reading of a numerical index 48, integral with the second half-shell 1b of the main body 1. Such index 48 identifies the flow rate of the supplied fluid in at the operating position adopted the knob 40.

At the inlet 21 and outlet 26 openings of the fluid, inlet 20 and outlet 27 fittings can be respectively applied to associate the flow rate regulator 100 to medical gas sources and user devices of various types.

A clear advantage of the aforedescribed flow rate regulator 100 lies in the considerable reduction of the longitudinal overall dimension with respect to the devices of the prior art, mainly due to the particular arrangement of the piston 3 and of the elastic means associated thereto inside the device.

Another advantage of the flow rate regulator described lies in the fact that it is extremely simple to construct, both due to the small number of elements and the inherent morphology of the same. Such construction simplicity has a positive impact both on the reliability of the product and on the industrialisation costs of the same.

A further and determinant advantage lies in the absolute stability and accuracy of the supplied flows, with performances comparable to those of more costly and bulky devices.

Obviously, the aforedescribed flow rate regulator can be subjected, by a man skilled in the art, to various modifications and variants all of which fall within the scope of protection of the invention, as described in the following claims.

## Claims

1. Flow rate regulator (100) comprising: a main body (1) having an inlet opening (21) and an outlet opening (26) for a fluid, both in communication with an internal chamber (23) to the main body (1); flow rate regulation means, for selecting a flow rate of the fluid delivered from the outlet opening (26), operating on the fluid downstream of the internal chamber (23); pressure reduction means operating on the fluid and comprising a piston (3) facing the internal chamber (23) and elastic means (30) associated thereto arranged to counter the fluid pressure in said internal chamber (23); said piston (3) comprising a stem (31) sealingly sliding inside a bush guide (10) whose internal volume communicates with the inlet opening (21) and a plate (32) delimiting an end of the internal chamber (23); said stem (31) having an internal channel (22) connecting the internal volume of the bush guide (10) with the internal chamber (23); said stem (31) and said internal channel (22) being shaped in a manner to throttle the fluid flow between the inlet opening (21) and the internal chamber (23) at a stopper configuration of the stem (31) inside the bush guide (10); **characterised in that** said plate (32) is integral to the stem (31) and **in that** said main body (1) is made up of a first half-shell (1a) and a second half-shell (1b), coupled by means of closure screws (13) and counter-shaped edges (14), the bush guide (34) being provided for in the first half-shell (1a), the piston (3) being arranged in a sliding manner inside the main body (1), its movement being limited in one direction by the contact with a surface of the first half-shell (1a), in the other direction by the contact with the surface of the second half shell (1b).

2. Flow rate regulator (100) according to claim 1, wherein the flow regulation means comprise a selection member having a plurality of calibrated orifices (24a-g) selectively interposable between the internal chamber (23) and the outlet opening (26).

3. Flow rate regulator (100) according to claim 2, wherein the selection member is a rotating disk (4), the calibrated orifices (24a-g) being arranged along a circumference of said rotating disk (4).

4. Flow rate regulator (100) according to claim 3, wherein the rotating disk (4) is a foil element held by a rotating drum (46) integral thereto, having through holes (47) aligned with the calibrated orifices (24a-g),

5. Flow rate regulator (100) according to claim 4, wherein the through holes (47) of the rotating drum (46) are directly facing the internal chamber (23), the rotating drum (46) delimiting an end of said internal chamber (23) opposite to the plate (32) of the piston (3).

6. Flow rate regulator (100) according to one of the claims 3 - 5, wherein the rotating drum/disk block (46; 4) is integrally associated to a regulation knob (40) by means of a central shaft (41); an intermediate portion (11) of the main body (1), passed through by said central shaft (41), being interposed between the rotating disk (4) and the regulation knob (40); said intermediate portion (11) having an elbow fitting (25) therein connecting a calibrated orifice (24a-g) to the outlet opening (26).

7. Flow rate regulator (100) according to claim 6, wherein said regulation knob (40) is arranged to snap-lock in a plurality of operating configurations, at each of said operating configurations a different calibrated orifice (24a-g), or a full portion (28) of the rotating disk (4) being interposed between the internal chamber (23) and the elbow fitting (25).

8. Flow rate regulator (100) according to claim 7, wherein at least one bead (43), cooperating with a locking spring (44) and indentations of the main body (1), is interposed between the regulation knob (40) and the main body (1) to allow the snap-locking of the regulation knob (40) in its operating configurations.

9. Flow rate regulator (100) according to one of the preceding claims, wherein the stem (31) of the piston (3) comprises at its free end a plug (33), cooperating with a seat (12) arranged on the bottom of the bush guide (10) to throttle the flow of the fluid entering into the internal volume of the bush guide (10).

10. Flow rate regulator (100) according to claim 9, wherein the channel (22) inside the stem (31) comprises a main portion (22a), longitudinal with respect to the stem (31) which opens on the surface of the stem (32) facing the internal chamber (23) and a secondary portion (22b), transverse with respect to the stem (31), which opens on the cylindrical lateral opening of said stem (31).

11. Flow rate regulator (100) according to one of the preceding claims, wherein the elastic means comprise a helical spring (30) coaxially arranged externally with respect to the bush guide (10).

12. Flow rate regulator (100) according to claim 1, wherein said first and said second half-shell (1a; 1b) are made by means of injection moulding of polymer material.

13. Flow rate regulator (100) according to any one of the preceding claims, wherein the face of the plate (32) facing the internal chamber (23) has a central concavity (34) bordered by a peripheral relief (35) intended to limit the movement of the piston (3) settling against an abutment surface (15) of the main body (1).

## Patentansprüche

1. Durchflussregler (100) aufweisend: einen Grundkörper (1) mit einer Einlassöffnung (21) und einer Auslassöffnung (26) für ein Fluid, und beide Öffnungen stehen mit einem Innenraum (23) mit dem Grundkörper (1) in Verbindung; Durchflussregulierungsmittel wirken auf das Fluid stromab des Innenraums (23) ein, um eine Durchflussmenge des Fluids, die von der Auslassöffnung (26) geliefert wird, auszuwählen; Druckreduzierungsmittel, die auf das Fluid einwirken und einen Kolben (3) aufweisen, sind dem Innenraum (23) und zugehörigen angeordneten elastischen Mitteln (30) zugewandt, um dem Fluiddruck im Innenraum (23) entgegenzuwirken; der Kolben (3) weist einen Schaft (31) auf, der dichtend in einer Führungshülse (10) gleitet, deren inneres Volumen mit der Einlassöffnung (21) und einem Blech (32), das ein Ende des Innenraums (23) begrenzt, in Verbindung steht; der Schaft (31) weist einen inneren Kanal (22) auf, der das innere Volumen der Führungshülse (10) mit dem Innenraum (23) verbindet; der Schaft (31) und der innere Kanal (22) sind derart ausgeführt, dass sie den Fluidstrom zwischen der Einlassöffnung (21) und dem Innenraum (23) an einer Anschlagsanordnung des Schafts (31) innerhalb der Führungshülse (10) drosseln; **dadurch gekennzeichnet, dass** das Blech (32) fest mit dem Schaft (31) verbunden ist und dass der Grundkörper (1) eine erste Halbschale (1a) und eine zweite Halbschale (1b) aufweist, die durch Verschlussschrauben (13) und entgegenwirkende Formkanten (14) verbunden sind, die Führungshülse (34) in der ersten Halbschale (1a) vorgesehen ist, der Kolben (3) gleitend im Inneren des Grundkörpers (1) angeordnet ist, wobei die Bewegung in eine Richtung durch den Kontakt mit der Oberfläche der ersten Halbschale (1a) und in der anderen Richtung durch den Kontakt mit der Oberfläche der zweiten Halbschale (1b) begrenzt ist.

2. Durchflussregler (100) nach Anspruch 1, **dadurch gekennzeichnet, dass** die Durchflussregulierungsmittel ein Auswahlelement aufweisen, das eine Vielzahl an kalibrierten Öffnungen (24a - g), die selektiv zwischen dem Innenraum (23) und der Auslassöffnung (26) schaltbar sind, umfasst.

3. Durchflussregler (100) nach Anspruch 2, **dadurch gekennzeichnet, dass** das Auswahlelement eine rotierende Scheibe (4) ist und die kalibrierten Öffnungen (24a-g) entlang eines Umfangs der rotierenden Scheibe (4) angeordnet sind.

4. Durchflussregler (100) nach Anspruch 3, **dadurch gekennzeichnet, dass** die rotierende Scheibe (4) ein Folienelement ist, das fest durch eine Drehtrommel (46) gehalten wird, die Durchgangslöcher (47), die fluchtend mit den kalibrierten Öffnungen (24a-g) sind, umfasst.

5. Durchflussregler (100) nach Anspruch 4, **dadurch gekennzeichnet, dass** die Durchgangslöcher (47) der Drehtrommel (46) unmittelbar dem Innenraum (23) zugewandt sind, die Drehtrommel (46) ein Ende des Innenraums (23) gegenüber des Blechs (32) des Kolbens (3) begrenzt.

6. Durchflussregler (100) nach einem der Ansprüche 3 bis 5, **dadurch gekennzeichnet, dass** die Drehtrommel/Diskplatte (46; 4) integral mittels einer Zentralwelle (41) mit einem Regelungsknauf (40) verbunden ist; ein Zwischenabschnitt (11) des Grundkörpers (1), durch den die Zentralwelle (41) verläuft, ist zwischen der rotierenden Scheibe (4) und dem Regelungsknauf (40) geschaltet; der Zwischenabschnitt (11) umfasst ein Knierohr (25), das eine kalibrierte Öffnung (24a - g) mit der Auslassöffnung (26) verbindet.

7. Durchflussregler (100) nach Anspruch 6, **dadurch gekennzeichnet, dass** der Regelungsknauf (40) in einer Vielzahl von Betriebskonfigurierungen durch Schnappverriegelung angeordnet ist, in jeder Betriebskonfigurierung ist eine kalibrierende Öffnung (24a - g) oder ein ausgefüllter Bereich (28) der rotierenden Scheibe (4) zwischen dem Innenraum (23) und dem Knierohr (25) geschaltet.

8. Durchflussregler (100) nach Anspruch 7, **dadurch gekennzeichnet, dass** zumindest eine Kugel (43), die mit einer Verriegelungsfeder (44) und Vertiefungen des Grundkörpers (1) zusammenwirkt, zwischen dem Regelungsknauf (40) und dem Grundkörper (1) geschaltet ist, um die Rastverriegelung des Regelungsknaufs (40) in den Betriebskonfigurierungen zu ermöglichen.

9. Durchflussregler (100) nach einem der vorhergehenden Ansprüche, **dadurch gekennzeichnet, dass** der Schaft (31) des Kolbens (3) an seinem freien Ende einen Stopfen (33) aufweist, der mit einer Passung (12), die an der Unterseite der Führungshülse (10) angeordnet ist, zusammenwirkt, um den Durchfluss des Fluids, der in das innere Volumen der Führungshülse (10) eintritt, zu drosseln.

10. Durchflussregler (100) nach Anspruch 9, **dadurch gekennzeichnet, dass** der Kanal (22) im Inneren des Schafts (31) einen Hauptabschnitt (22a), der in Bezug auf den Schaft (31) in Längsrichtung verläuft und zur Fläche des Schafts (32), die dem Innenraum (23) zugewandt ist, geöffnet ist und einen zweiten Abschnitt (22b), der in Bezug auf den Schaft (31) transversal verläuft und zur zylindrischen lateralen Öffnung des Schafts (31) geöffnet ist, aufweist.

11. Durchflussregler (100) nach einem der vorhergehenden Ansprüche, **dadurch gekennzeichnet, dass** die elastischen Mittel eine Schraubenfeder (30), die in Bezug auf die Führungshülse (10) koaxial und außerhalb dieser angeordnet ist, aufweisen.

12. Durchflussregler (100) nach Anspruch 1, **dadurch gekennzeichnet, dass** die erste und die zweite Halbschale (1a, 1b) mittels Spritzgießen von Polymeren hergestellt werden.

13. Durchflussregler (100) nach einem der vorhergehenden Ansprüche, **dadurch gekennzeichnet, dass** die Fläche des Blechs (32), die dem Innenraum (23) zugewandt ist, eine zentrale Wölbung (34) aufweist, die an ein umlaufendes Relief (35) angrenzt, um die Bewegung des Kolbens (3) gegenüber einer Anlagefläche (15) des Grundkörpers (1), zu begrenzen.

## Revendications

1. Régulateur de taux d'écoulement (100) comprenant : un corps principal (1) ayant une ouverture d'entrée (21) et une ouverture de sortie (26) pour un fluide, toutes deux en communication avec une chambre interne (23) du corps principal (1); un moyen de régulation du taux d'écoulement, pour choisir un taux d'écoulement du fluide délivré depuis l'ouverture de sortie (26), agissant sur le fluide en aval de la chambre interne (23) ; un moyen de réduire la pression agissant sur le fluide et comprenant un piston (3) faisant face à la chambre interne (23) et un moyen élastique (30) associé à celui-ci placé de manière à mesurer la pression du fluide dans ladite chambre interne (23); ledit piston (3) comprenant une tige (31) coulissant de manière étanche dans une douille de guidage (10) dont le volume interne communique avec l'ouverture d'entrée (21) et une plaque (32) délimitant une extrémité de la chambre interne (23); ladite tige (31) ayant un canal interne (22) connectant le volume interne de la douille de guidage (10) à la chambre interne (23); ladite tige (31) et ladite chambre interne (22) étant formées de manière à étrangler l'écoulement du fluide entre l'ouverture d'entrée (21) et la chambre interne (23) à une configuration d'arrêt de la tige (31) à l'intérieur de la douille de guidage (10); **caractérisé en ce que** ladite plaque (32) est solidaire de la tige (31) et **en ce que** ledit corps principal (1) est constitué d'une première demi-coque (1a) et d'une deuxième demi-coque (1b) couplées au moyen de vis de fermeture (13) et de bords à formes complémentaires (14), la douille de guidage (34) étant prévue dans la première demi-coque (1a), le piston (3) étant disposé de manière coulissante à l'intérieur du corps principal (1), son mouvement étant limité dans une direction par le contact avec une surface de 1a première demi-coque (1a), dans l'autre direction par le contact avec la surface de la deuxième demi-coque (1b).

2. Régulateur de taux d'écoulement (100) selon la revendication 1, **caractérisé en ce que** le moyen de régulation de l'écoulement comprend un élément de sélection ayant une pluralité d'orifices calibrés (24a-g) pouvant être interposés sélectivement entre la chambre interne (23) et l'ouverture de sortie (26).

3. Régulateur de taux d'écoulement (100) selon la revendication 2, **caractérisé en ce que** l'élément de sélection est un disque rotatif (4), les orifices calibrés (24a-g) étant placés le long d'une circonférence dudit disque rotatif (4).

4. Régulateur de taux d'écoulement (100) selon la revendication 3, **caractérisé en ce que** le disque rotatif (4) est une feuille maintenue par un tambour rotatif (46) solidaire de celle-ci, ayant des trous ouverts (47) alignés avec les orifices calibrés (24a-g).

5. Régulateur de taux d'écoulement (100) selon la revendication 4, **caractérisé en ce que** les trous ouverts (47) du tambour rotatif (46) font directement face à la chambre interne (23), le tambour rotatif (46) délimitant une extrémité de ladite chambre interne (23) opposée à la plaque (32) du piston (3).

6. Régulateur de taux d'écoulement (100) selon l'une quelconque des revendications 3 à 5, **caractérisé en ce que** le bloc rotatif tambour/disque (46; 4) est associé intégralement à un bouton de régulation (40) au moyen d'un arbre central (41); une portion intermédiaire (11) du corps principal (1), traversée par le dit arbre central (41), étant interposée entre le disque rotatif (4) et le bouton de régulation (40), la dite portion intermédiaire (11) ayant un coude (25) connectant ainsi un orifice calibré (24a-g) à l'ouverture de sortie (26).

7. Régulateur du taux d'écoulement (100) selon la revendication 6, **caractérisé en ce que** ledit bouton de régulation (40) est disposé de manière à s'accrocher et se verrouiller dans une pluralité de configurations de fonctionnement, à chacune desdites configurations de fonctionnement un orifice calibré différent (24a-g), ou une portion entière (28) du disque rotatif (4) étant interposé entre la chambre interne (23) et le coude (25).

8. Régulateur du taux d'écoulement (100) selon la revendication 7, **caractérisé en ce qu'**au moins un bourrelet (43), coopérant avec un ressort de verrouillage (44) et des indentations du corps principal (1), est interposé entre le bouton de régulation (40) et le corps principal (1) pour permettre l'accrochage et le verrouillage du bouton de régulation (40) dans ses configurations de fonctionnement.

9. Régulateur du taux d'écoulement (100) selon l'une quelconque des revendications précédentes, **caractérisé en ce que** la tige (31) du piston (3) comprend à son extrémité libre une soupape (33), coopérant avec une embase (12) placée au fond de la douille de guidage (10) pour étrangler l'écoulement du fluide pénétrant dans le volume interne de la douille de guidage (10).

10. Régulateur du taux d'écoulement (100) selon la revendication 9, **caractérisé en ce que** le canal (22) à l'intérieur de la tige (31) comprend une portion principale (22a), longitudinale par rapport à la tige (31) qui s'ouvre à la surface de la tige (32) faisant face à la chambre interne (23) et une portion secondaire (22b), transversale par rapport à la tige (31), qui s'ouvre sur l'ouverture latérale cylindrique de la dite tige (31).

11. Régulateur du taux d'écoulement (100) selon l'une quelconque des revendications précédentes, **caractérisé en ce que** le moyen élastique comprend un ressort hélicoïdal (30) placé de manière coaxiale externe par rapport à la douille de guidage (10).

12. Régulateur du taux d'écoulement (100) selon la revendication 1, **caractérisé en ce que** les dites première et deuxième demi-coques (la, 1b) sont obtenues par moulage par injection de matériau polymère.

13. Régulateur du taux d'écoulement (100) selon l'une quelconque des revendications précédentes, **caractérisé en ce que** le côté de la plaque (32) faisant face à la chambre interne (23) présente une concavité centrale (34) bordée par un relief périphérique (35) destiné à limiter le mouvement du piston (3) se logeant contre une surface de butée (15) du corps principal (1).
